Europäisches Patentamt

European Patent Office

Office européen des brevets

(19)

(11) Numéro de publication: **0 245 157**
**A1**

# (12) DEMANDE DE BREVET EUROPEEN

(21) Numéro de dépôt: **87400974.9**

(22) Date de dépôt: **28.04.87**

(51) Int. Cl.⁴: **C 09 K 7/06**

---

(30) Priorité: **05.05.86 FR 8606452**

(43) Date de publication de la demande: **11.11.87**
**Bulletin 87/46**

(84) Etats contractants désignés: **DE FR GB IT NL**

(71) Demandeur: **RHONE-POULENC CHIMIE, 25, quai Paul Doumer, F-92408 Courbevoie Cédex (FR)**

(72) Inventeur: **Aurenge, Jacques, La Ferlatière, F-69370 Saint-Didier au Mont d'Or (FR)**

(74) Mandataire: **Tavernier, Colette et al, RHONE-POULENC INTERSERVICES Service Brevets Chimie 25, Quai Paul Doumer, F-92408 Courbevoie Cédex (FR)**

---

(54) Composition émulsifiante et émulsion inverse la contenant.

㊼ La composition émulsifiante résulte de la réaction à chaud d'un acide gras avec un mélange aminé constitué de diéthanolamine et de polyamines.

Les émulsions eau-dans-huile contenant ladite composition émulsifiante sont utiles notamment comme fluides de forage et de traitement de puits.

EP 0 245 157 A1

1

# COMPOSITION EMULSIFIANTE ET EMULSION INVERSE LA CONTENANT

La présente invention concerne de nouvelles compositions émulsifiantes. L'invention concerne également les émulsions eau dans huile contenant lesdites compositions émulsifiantes ainsi que leur emploi dans les fluides de forage et de traitement de puits.

Les fluides utilisés pour le forage des puits dans la recherche pétrolière, géothermique ou autre sont soit à base d'eau, soit à base d'huile minérale avec addition de divers additifs permettant l'obtention de bonnes propriétés rhéologiques et de bonnes propriétés de filtration et de non colmatage des formations géologiques traversées.

Lors de la traversée des zones argileuses et aussi dans le cas des forages aux environs de la "roche réservoir", il est nécessaire d'utiliser les fluides de forage à base d'huile ou d'émulsion eau-dans-huile car ils évitent le gonflement des argiles traversées et sont moins colmatants que les fluides à base d'eau.

Divers produits tensio-actifs ont été proposés pour faire des émulsions eau-dans-huile dites émulsions inverses. Ces tensio-actifs doivent conférer une bonne stabilité à l'émulsion considérée en particulier aux températures élevées que l'on rencontre fréquemment dans les puits de grande profondeur. Parmi les émulsifiants couramment utilisés figurent les imidazolines grasses, les amides et polyamidoamines d'acides gras. Les imidazolines grasses ont pour avantage de se présenter sous forme liquide à basse température mais elles sont sensibles à l'humidité et leur stabilité dans le temps laisse à désirer du fait de leur tendance à l'hydrolyse. Les amides d'acides gras se présentent en général sous forme cristallisée, ce qui représente un inconvénient majeur, les utilisateurs voulant des produits liquides, dont le dosage et l'utilisation par pompes de circulation ou gravité est de mise en oeuvre simple et immédiate.

L'emploi d'imidazolines, en mélange éventuel avec au plus 30 % de mono-et/ou diamides a été proposé dans la demande de brevet EP-A-0134173. Cet émulsifiant a pour inconvénient sa forte viscosité à l'état brut et son prix de revient relativement élevé.

0245157

2

US-A-4 374 737 décrit un concentrat pour fluide de forage constitué d'acide gras de tall-oil, de diéthanolamide, et d'un mélange imidazoline/amide qui, à température ambiante conduirait à la formation des sels d'acides gras des divers composés en présence.

FR-A-2 075 400 décrit une composition émulsifiante comprenant le sel d'acide gras d'une imidazoline grasse et un sel d'acide carboxylique à longue chaîne et d'amidoamine à longue chaîne.

La présente invention a pour objet une nouvelle composition émulsifiante chimiquement stable se présentant sous forme liquide à des températures allant jusqu'à -15°C, soluble à froid dans les huiles et conférant aux émulsions des caractéristiques de stabilité élevée.

La composition émulsifiante selon l'invention est caractérisée en ce qu'elle comprend le produit de réaction à une température supérieure à 125°C d'au moins un acide gras saturé ou insaturé en $C_8-C_{30}$ avec un mélange aminé constitué de 50 à 70 % en poids de diéthanolamine et 50 à 30 % d'au moins une polyamine de formule $X-(CH_2)_2-NH-(CH_2-CH_2-NH)_n-(CH_2)_2-NH_2$ dans laquelle X représente OH ou $NH_2$ avec au moins 50 % de X étant $NH_2$, n est compris entre 0 et 3 dans un rapport molaire acide/composé aminé compris entre 0,4/1 et 0,7/1.

Les acides gras utilisés sont constitués par les acides naturels et synthétiques, saturés ou insaturés, contenant 8 à 30, de préférence 16 à 20 atomes de carbone. On cite plus particulièrement l'acide palmitique, l'acide oléique, l'acide stéarique, l'acide linoléique, l'acide linolénique et leurs mélanges. De manière avantageuse, on peut utiliser les mélanges d'acides gras du commerce tels que les acides gras obtenus par distillation du tall-oil.

Les polyamines de formule $X-(CH_2)_2-NH-(CH_2-CH_2-NH)_n-(CH_2)_2-NH_2$ incluent l'aminoéthyléthanolamine, l'hydroxyéthyldiéthylènetriamine, l'hydroxyéthyltriéthylènetétramine, le diéthylènetriamine, le triéthylènetétramine, le tétraéthylènepentamine ainsi que leurs mélanges. Dans ces mélanges de polyamines, la quantité de fonctions X représentées par $NH_2$ est au moins égale, et de préférence supérieure à la quantité de fonctions X représentées par OH. Des compositions émulsifiantes intéressantes ont été obtenues par réaction d'acides gras de tall-oil avec un mélange aminé constitué de 50-70 % de diéthanolamine, 10-15 % d'aminoéthyléthanolamine, 18-26 % de triéthylènetétramine et 2-8 % de tétraéthylènepentamine (% exprimés en poids).

Pour la préparation de la composition émulsifiante, on chauffe ensemble le ou le(s) acides gras et les composés polyaminés, sous pression atmosphérique et/ou sous vide à une température comprise entre environ 125°C et 250°C, de préférence égale à au moins 150°C, dans un rapport molaire acide/composé aminé (diéthanolamine + polyamine) compris entre 0,4 et 0,7/1 et de préférence égal à 0,5/1. L'eau issue de la condensation est éliminée progressivement. De manière avantageuse, la réaction est conduite en présence d'un solvant formant un azéotrope avec l'eau, par exemple le toluène. Il est essentiel que le nombre de moles d'eau éliminées par mole équivalent de mélange aminé soit au moins égal à 1,7.

Le produit issu de la condensation est un mélange complexe contenant des amides secondaires et tertiaires, des hydroxyamides secondaires et tertiaires, des imidazolines et diimidazolines grasses, des monoesters et diesters d'acides gras, et des polyéthanolamines partiellement condensées sur les fonctions résiduelles $-NH_2$, NH et OH des produits précédents.

La composition émulsifiante selon l'invention est un liquide transparent, soluble dans les hydrocarbures, ayant un point de cristallisation inférieur à -15°C. Elle présente l'avantage d'une mise en oeuvre simple et d'une dissolution très rapide dans le milieu d'utilisation, à température ambiante et même à des températures inférieures, jusqu'à environ -15°C. Les émulsions eau dans l'huile la contenant, en des proportions pouvant varier de 1 à 10 % selon l'utilisation sont très stables même à des températures excédant 200°C. Du fait de ces avantages, elles sont particulièrement appropriées pour la réalisation de boues de forage à émulsion inverse.

Les fluides de forage du type à émulsion inverse, qui entrent également dans le cadre de la présente invention, contiennent les composants usuels de ce type de fluides, c'est-à-dire une phase huileuse, une phase aqueuse, un émulsifiant, un réducteur de filtrat et éventuellement des adjuvants usuels tels que composés basiques, matériaux de lestage, etc.

La phase huileuse est constituée par une huile hydrocarbonée quelconque de densité suffisante, généralement comprise entre 0,75 et 0,9, et peut être choisie, par exemple, parmi des produits tels que le gas-oil, les fuels, le kérosène, le pétrole brut, les paraffines et isoparaffines liquides, les fractions raffinées d'huile minérale et les coupes d'hydrocarbures desaromatisées.

La phase aqueuse peut être formée simplement par de l'eau ou, de préférence, par une solution aqueuse de chlorure de sodium ou toute saumure contenant, en outre, du chlorure de calcium et éventuellement d'autres sels de métaux alcalino-terreux.

La proportion d'eau, introduite sous l'une des formes qui viennent d'être énumérées, s'établit par rapport à la quantité d'huile initiale. En pratique, le rapport eau/huile, exprimé en volume, peut varier entre des limites larges telles que 50/50 à 5/95.

La composition émulsifiante selon l'invention peut être incorporée en des quantités généralement comprises entre 10 et 50 g par litre de boue.

Elle peut bien entendu être utilisée en mélange avec d'autres émulsifiants de type connu, la quantité ci-avant préconisée étant alors inférieure. Le réducteur de filtrat peut être de type classique et est avantageusement choisi parmi les composés phénoliques. A ce titre, on peut citer à titre non limitatif les monophénols comme les cresols, les xylenols ; les diphénols et alkyldiphénols comme le pyrocatechol, le 3-méthylpyrocatechol, le 4-méthylpyrocatechol, le 3-éthylpyrocatechol, l'hydroquinone, les méthyl- et diméthylhydroquinones, le résorcinol ; les triphénols et alkyltriphénols comme le pyrogallol, le phloroglucinol, le 5-méthylpyrogallol etc... ainsi que leurs mélanges entre eux. On peut encore avoir recours à des produits bruts comme les creosotes, à des résidus de distillation du bois, à des résidus asphaltiques plus ou moins oxydés ou à des dérivés de lignite.

Il peut être avantageux d'ajouter à l'émulsion inverse un composé basique, en particulier de la chaux vive ou éteinte qui permet d'élever le pH du fluide. Enfin celle-ci peut encore contenir les charges usuelles, telles que sulfate de baryum finement divisé, carbonate de calcium, argile ou tout autre matériau de lestage connu, qui permettent de conférer au produit final la densité recherchée.

En pratique, pour préparer ces fluides, on ajoute la phase aqueuse à la phase huileuse qui contient la composition émulsifiante selon l'invention et l'on forme l'émulsion inverse par agitation du mélange pendant un temps convenable, avec des systèmes mélangeurs ordinaires ne nécessitant pas de cisaillement élevé. Le composé basique et le réducteur de filtrat classique, s'ils sont utilisés, sont incorporés à un stade quelconque de la préparation, c'est-à-dire avant ou après la formation de l'émulsion. Les charges sont généralement introduites en fin d'opération.

Les exemples suivants illustrent l'invention sans en limiter la portée.

Exemple 1

On met en oeuvre :

a) un mélange d'acides gras obtenus par distillation du tall oil, de composition suivante :

| | |
|---|---|
| Acide oléique | 50-55 % |
| Acide linoléique | 30-40 % |
| Acide palmitique | 3-5 % |
| Acide linolénique | 1-2 % |
| Indice d'acide | 193-196 |
| Indice de saponification | 195-198 |
| Indice d'iode | 120-130 |

b) un mélange aminé comprenant :

| | |
|---|---|
| diéthanolamine | 59 % |
| Aminoéthyléthanolamine | 14 % |
| Triéthylènetétramine | 20 % |
| Tétraéthylènepentamine | 7 % |

Dans un réacteur équipé d'un agitateur, et d'un système de recyclage de solvant, on charge 1 810 g (16 moles équivalentes) du mélange aminé et 300 g de toluène puis on introduit sous agitation 2 258 g (8 moles équivalentes) du mélange d'acides. Le mélange est chauffé à 150°C sous pression atmosphérique, et la température est élevée progressivement jusqu'à 230°C. L'eau est éliminée en continu par distillation de l'azéotrope eau-toluène. Le chauffage est poursuivi pendant 15 heures, temps au bout duquel on n'observe plus de formation d'eau. Le poids d'eau éliminé est de 573 g.

Après refroidissement, la masse réactionnelle est un liquide transparent, de couleur ambrée, ayant une viscosité à 20°C, de l'ordre de 400 mPa.s ne cristallisant pas à −15°C.

L'analyse par spectrométrie RMN et spectrométrie d'absorption infra-rouge a permis d'évaluer les différents constituants et leur répartition molaire qui serait approximativement comme suit :

. Amides secondaires :

1) $R-\overset{\overset{O}{\|}}{C}-NH-(CH_2)_2-NH-(CH_2)_2-OH$..............  6 %

2) $R-\overset{\overset{O}{\|}}{C}-NH-(CH_2)_2-\left[NH-(CH_2)_2\right]_n-NH_2$..........  14 %

. Amides tertiaires :

1) $R-\overset{\overset{O}{\|}}{C}-N\overset{\diagup(CH_2)_2-X}{\diagdown(CH_2)_2-OH}$   $\begin{bmatrix} X = NH_2............ & 5 \% \\ X = OH............. & 10 \% \end{bmatrix}$

2) $R-\overset{\overset{O}{\|}}{C}-N\overset{\diagup(CH_2)_2-NH_2}{\diagdown(CH_2)_2-\left[NH-(CH_2)_2\right]_n NH_2}$   .........  5 %

. Imidazolines :

$X-CH_2-CH_2 \overset{R-C=N}{\underset{CH_2-CH_2}{\diagup N \diagdown CH_2}}$   $\begin{bmatrix} X = NH_2............ & 10 \% \\ X = OH............. & 10 \% \end{bmatrix}$

. Esters d'acides gras

$R-C\overset{\diagup\!\!\diagup O}{\diagdown O-(CH_2)_2-NH-(CH_2)_2-OH}$   ..............  5 %

. Polyéthanolamines (forme libre ou radicaux liés)

$$HO-\left[(CH_2)_2-NH-(CH_2)_2O\right]_m-H \quad \ldots\ldots\ldots\ldots\ldots\ldots\ldots\ldots\quad 35\ \%$$

Dans ces formules R est le radical hydrocarboné des acides gras, n est 1 ou 2 et m est 3 à 6.

Exemple 2

Les performances de la composition émulsifiante de l'exemple 1 sont testées en formulations boues inverses.

Trois émulsions, dont les formulations sont données dans le Tableau 1, ont été préparées :

On verse sous faible agitation l'émulsifiant dans l'hydrocarbure, on ajoute l'eau additionnée des sels minéraux (ou la saumure) puis le réducteur de filtrat, et les charges. La composition est homogénéisée 5 à 10 minutes sous agitation modérée.

Sur chacune des boues on réalise les tests suivants :

a) Test de contamination argileuse (TCA)

- La boue est mise en étuve de roulage à 120°C pendant 16 heures. Les mesures de rhéologie, filtration et stabilité électrique sont faites (filtration HP.HT à 120°C).

- A la boue ayant subi le traitement précédent, on ajoute 20 % d'argile. La boue est à nouveau mise en étuve de roulage 16 heures à 120°C, puis les mesures précédentes (rhéologie, filtration, stabilité électrique) sont effectuées.

b) Test thermique (TT)

- Un premier "travail de la boue" en étuve de roulage est entrepris pendant 16 H à 90°C et les caractéristiques précédentes mesurées (Filtration HP.HT à 90°C).

- Un deuxième travail à 120°C pendant 16 H est réalisé sur les boues ayant déjà travaillé une première fois avec la mesure des mêmes caractéristiques que précédemment (Filtration HP.HT à 120°C).

8

- Un troisième essai identique au précédent mais à 150°C est réalisé sur les boues ayant déjà travaillé deux fois puis mesure des caractéristiques (Filtration HP.HT à 150°C).
- Un quatrième essai est réalisé à 175°C avec le même type de procédure (Filtration HP.HT à 175°C).

Les viscosités apparente VA plastique VP, le seuil de cisaillement ou "yield value" YV et les résistances du gel initial et du gel à 10 minutes Gel 0/10 sont mesurées à l'aide d'un viscosimètre Fann à 60°C.

La réduction de filtrat F(HP.HT) est déterminée sur filtre-presse HP.HT (haute pression, haute température) sous une pression de 35 kg/cm² selon la méthode normalisée de l'Institut Américain des Pétroles (A.P.I.).

La stabilité électrique de l'émulsion VB exprimée en volts correspond à la tension minimum nécessaire au passage d'un courant continu entre deux électrodes de référence. Une valeur tension de rupture VB supérieure à 500 volts est caractéristique d'un bon émulsifiant.

Les résultats des mesures figurent dans les Tableaux 2 à 4.

TABLEAU 1

| N° formulation | I | | II | | III | |
|---|---|---|---|---|---|---|
| | CaCl$_2$ 2H$_2$O | 70 g | | | | |
| | H$_2$O dist. | 283 ml | Saumure NaCl sat. | 274 ml | Saumure NaCl sat. | 274 ml |
| | Fuel oil | 546 ml | Exsol D 80 $^\circledR$ | 543 ml | Fuel oil | 543 ml |
| | Emulsifiant (Ex. 1) | 25 ml | Emulsifiant (Ex. 1) | 25 ml | Emulsifiant (Ex. 1) | 25 ml |
| | Pétrogil RF 3$^\circledR$ | 30 ml | Pétrogil RF 3$^\circledR$ | 30 ml | Pétrogil RF 3$^\circledR$ | 30 ml |
| | Ca(OH)$_2$ | 30 g | Ca(OH)$_2$ | 30 g | Ca(OH)$_2$ | 30 g |
| | Barytine | 286 g | Barytine | 286 g | Barytine | 286 g |
| | Bentone 34 | 10 g | Bentone 34 | 15 g | Bentone 34 | 10 g |
| Volume total | 1.000 ml | | 1.000 ml | | 1.000 ml | |
| | H/E = 66/34 d = 1,18 | | H/E = 70/30 d = 1,19 | | H/E = 70/30 d = 1,21 | |

Saumure NaCl saturé = 325 g NaCl/litre de saumure
Exsol D 80 = Coupe pétrolière désaromatisée (ESSO CHIMIE)  PETROGIL RF 3 : réducteur de filtrat
(Rhône-Poulenc Spécialités Chimiques)
BENTONE 34 : argile viscosifiante organophile

TABLEAU 2

Formulation I

| | VB<br>V | | VA<br>mPa.s | VP<br>mPa.s | YV<br>1b/100 ft$^2$ | Gel<br>0/10 | F(HP.HT)<br>ml |
| --- | --- | --- | --- | --- | --- | --- | --- |
| | avant<br>roulage | après<br>roulage | | | | | |
| TCA avant argile | 1560 | 1200 | 30 | 25 | 10 | 4/7 | 0,6 |
| TCA après argile | 920 | 620 | 49 | 41 | 16 | 6/10 | 0,8 |
| TT/90°C | 1500 | 1060 | 30 | 25 | 10 | 3/6 | 1 |
| TT/120°C | | 940 | 28 | 23 | 10 | 3/6 | 0,2 |
| TT/150°C | | 820 | 25 | 21 | 8 | 3/5 | 0,6 |
| TT/175°C | | 520 | 21 | 20 | 2 | 1/1 | * |

TCA : test de contamination argileuse
TT  : test thermique
* Filtrat non mesuré : boue légèrement sédimentée à l'ouverture de la cellule de roulage

1 1b/100 ft$^2$ = 0,478 Pa

TABLEAU 3

Formulation II

| | VB V | | VA mPa.s | VP mPa.s | YV lb/100 ft$^2$ | Gel 0/10 | F(HP.HT) ml |
|---|---|---|---|---|---|---|---|
| | avant roulage | après roulage | | | | | |
| TCA avant argile | 1280 | 1400 | 24 | 20 | 8 | 4/7 | 1,2 |
| TCA après argile | 1360 | 1400 | 47 | 42 | 10 | 6/10 | 1,2 |
| TT/90°C | 1440 | 1500 | 25 | 20 | 10 | 4/6 | 2 |
| TT/120°C | | 1860 | 26 | 21 | 10 | 4/6 | 1,6 |
| TT/150°C | | 1440 | 25 | 20 | 10 | 4/6 | 1,6 |
| TT/175°C | | 1400 | 25 | 23 | 4 | 3/7 | 2,2 |

TCA : test de contamination argileuse
TT  : test thermique

1 lb/100 ft$^2$ = 0,478 Pa

TABLEAU 4

Formulation III

| | VB V | | VA mPa.s | VP mPa.s | YV lb/100 ft$^2$ | Gel 0/10 | F(HP.HT) ml |
|---|---|---|---|---|---|---|---|
| | avant roulage | après roulage | | | | | |
| TCA avant argile | 2000 | 2000 | 36 | 31 | 10 | 4/8 | 0,1 |
| TCA après argile | 1800 | 1460 | 66 | 61 | 10 | 6/12 | 0,4 |
| TT/90°C | 2000 | 2000 | 36 | 31 | 10 | 4/7 | 1 |
| TT/120°C | | 2000 | 36 | 30 | 12 | 5/8 | 0,4 |
| TT/150°C | | 1600 | 33 | 30 | 6 | 4/7 | 0,6 |
| TT/175°C | | 1760 | 29 | 29 | 0 | 1/2 | * |

TCA : test de contamination argileuse
TT  : test thermique
* Filtrat non mesuré - Boue légèrement sédimentée à l'ouverture de la cellule de roulage

1 lb/100 ft$^2$ = 0,478 Pa

## REVENDICATIONS

1) Composition émulsifiante caractérisée en ce qu'elle comprend le produit de réaction à une température supérieure à 125°C d'au moins un acide gras saturé ou insaturé en $C_8$-$C_{30}$ avec un mélange aminé constitué de 50 à 70 % en poids de diéthanolamine et 50 à 30 % d'une polyamine de formule $X-(CH_2)_2-NH-(CH_2-CH_2-NH)_n-(CH_2)_2-NH_2$ dans laquelle X représente OH ou $NH_2$, au moins 50 % de X étant $NH_2$, n est compris entre 0 et 3, dans un rapport molaire acide/composé aminé compris entre 0,4/1 et 0,7/1.

2) Composition selon la revendication 1 caractérisée en ce que l'acide gras est un mélange d'acides de distillation du tall-oil.

3) Composition selon la revendication 1 caractérisée en ce que le mélange aminé est constitué de 50-70 % de diéthanolamine, 10-15 % d'aminoéthyléthanolamine, 18-26 % de triéthylènetétramine et 2-8 % de tétraéthylènepentamine.

4) Composition selon l'une des revendications 1 à 3 caractérisé en ce que le rapport molaire acide/composé aminé est égal à 0,5/1.

5) Emulsions eau-dans-huile contenant 1 à 10 % de la composition émulsifiante selon l'une des revendications 1 à 4.

6) Emploi de la composition émulsifiante selon l'une des revendications 1 à 5 comme additif à une boue de forage à émulsion inverse.

7) Emploi selon la revendication 6 caractérisé en ce que la composition émulsifiante est incorporée en des quantités comprises entre 10 et 50 g par litre de boue.

0245157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | US-A-2 946 746  (H.F. KELLER) <br><br> * Colonne 1, lignes 15-19; colonne 2, lignes 29-37,57-72; colonne 3, lignes 1-4; colonne 4, lignes 44-54; colonne 5, exemple VIII; revendication 1 * <br><br>--- | 1,3,5,6 | C 09 K    7/06 |
| X,Y D | US-A-3 728 277  (J.T. FOLEY) <br><br> * Colonne 1, lignes 28-34; colonne 2, lignes 23-45,65-72; colonne 3, lignes 1-5,22-44,55-75; colonne 4, lignes 1-12,43-50; exemple V *  & FR-A-2 075 400 * <br><br>--- | 1-3,5-7 | |
| Y | GB-A-2 158 437  (MILCHEM) <br><br> * Page 1, lignes 5-7,55-65; page 3, lignes 7-28; page 6, lignes 38-41; revendications 1-3,8 * <br><br>----- | 1,2,3,6 | DOMAINES TECHNIQUES RECHERCHES (Int. Cl.4) <br><br> C 09 K |

Le présent rapport de recherche a été établi pour toutes les revendications

| Lieu de la recherche | Date d'achèvement de la recherche | Examinateur |
|---|---|---|
| LA HAYE | 10-07-1987 | BOULON A.F.J. |